# EUROPEAN PATENT SPECIFICATION

(11) **EP 0 716 460 B1**
(45) Date of publication and mention of the grant of the patent: **24.03.1999**
(21) Application number: 95117728.6
(22) Date of filing: 09.11.1995
(51) Int. Cl.: H01M 2/10, H01M 2/20, H01M 2/22, H01M 10/04

(54) **Combined battery**
Kombinierte Batterie
Batterie combinée

(30) Priority: 07.12.1994 JP 331224/94
(43) Date of publication of application: 12.06.1996
(73) Proprietor: HONDA GIKEN KOGYO KABUSHIKI KAISHA, Minato-ku Tokyo 107 (JP)
(72) Inventor: Takeda, Toru, c/o K.K. Honda, Wako-shi, Saitama (JP); Nakazawa, Yoshihiro, c/o K.K. Honda, Wako-shi, Saitama (JP)
(74) Representative: Liska, Horst, Dr.-Ing.

(56) References cited:
- EP-A- 0 562 869
- EP-A- 0 568 339
- US-A- 2 487 499
- US-A- 4 346 151

## Description

The invention refers to a combined battery, comprising a plurality of unit cells integrally packed, said unit cells being arranged in multiple columns extending in one row direction, according to the preamble of claim 1. Such a combined battery is known from US-4,346,151. There the insulating member is made of a grid of integrally cast plastic material. The thickness of this material between the unit cells within one row and between the unit cells within one column is identical. The manufacturing of this insulating element is comparatively expensive.

Japanese Utility Model Laid-open No. Sho 54-71120 discloses a combined battery comprising a plurality of cylindrical units cell integrally covered with a case, the unit cells being arranged in a plurality of rows and in a plurality of columns, wherein each unit cell is wrapped with an insulating sheet.

In the above-described combined battery, the unit cells are linearly aligned both in the column direction and in the row direction. Accordingly, each gap is formed in an approximately crossing shape between the adjacent unit cells. The volume of such a gap is relatively large, to increase the size of the combined battery. Moreover, the temperature in the combined battery is difficult to be equalized. This makes inhomogeneous the electrochemical reaction, failing to obtain the uniform battery performance and to achieve the long service life of the battery.

Since the gap in which a temperature detecting element is inserted is relatively large, it is difficult to accurately measure the temperature of the battery. Also, in the assembling process of the combined battery, the wrapping of each unit cell with an insulating sheet takes a lot of time, resulting in poor workability. To solve the above problems, an object of the present invention is to provide a combined battery of the kind defined above, wherein the manufacturing of the insulating member is simplified. A further object is to provide a combined battery capable of stabilizing the battery performance, prolonging the service life of the battery and making easy the manufacture thereof.

To achieve the above object, according to the present invention, there is provided a combined battery comprising a plurality of unit cells integrally packed, said unit cells being arranged in multiple columns extending in one row directicn; wherein said unit cells are arranged in a staggered fashion between said columns adjacent to each other; and an insulating member provided for partitioning said unit cells from each other comprises between-column unit cell partitioning portions for partitioning said unit cells in said adjacent columns from each other, and in-row unit cell partitioning portions integrally extending from said between-column unit cell partitioning portions for partitioning said unit cells adjacent to each other in the row direction of each column from each other, characterized in that said insulating member is formed by a longitudinally extending element, wherein said between-column unit cell partitioning portions are formed of single layer sections of said longitudinally extending element and wherein said in-row unit cell partitioning portions are formed of double layer sections of said longitudinally extending element, a first layer of the double layer sections extending from one section of said between-column unit cell partitioning portions and a second layer of double layer sections returning to another section of said between-column unit cell partitioning portions.

By using a longitudinally extending element as a base material and using sections of this element as single layer sections and double layer sections for the betweeen-column unit cell partitioning portions and the in-row unit cell partitioning portion, respectively, the manufacturing is simple.

Further, a temperature detecting element for detecting the temperature of the battery can be inserted in one of gaps each being formed by three pieces of the adjacent unit cells.

In the present invention, unit cells are arranged in a staggered fashion between columns vertically adjacent to each other, so that a gap is formed in an approximately triangular shape by the adjacent unit cells. The volume of the triangular gap is relatively small, as compared with the conventional gap formed in an approximately crossing shape. As a result, the temperature of the battery pack is equalized, to make homogeneous the electrochemical reaction, thus prolonging the service life of the battery.

An accurate average temperature of the unit cells can be also measured by inserting a temperature detecting element in such a small gap.

In the present invention, the insulating member has between-column unit cell partitioning portions for partitioning the unit cells in the upper and lower columns from each other, and in-row unit cell partitioning portions branched from the between-column unit cell partitioning portions for partitioning the adjacent unit cells in the row of each column from each other. Accordingly each partitioned space for containing one unit cell can be formed by one between-column unit cell partitioning portion and a pair of the adjacent in-row unit cell partitioning portions in each column. As a result, the battery pack can be assembled only by sequentially inserting unit cells in these partitioned spaces one by one, to thereby significantly improve workability in the assembling process.

### Brief Description of the Drawings

Fig. 1 is a side view of essential portions of a front frame comprising a battery according to an embodiment of the present invention.

Fig. 2 is a side view of a bicycle provided with an auxiliary motive-power to which the present invention is applied.

Fig. 3 is a sectional view taken along the line 3-3 of Fig. 1.

Fig. 4 is a side view of a battery case according to the embodiment of the present invention, with parts partially cut-away.

Fig. 5 is a view of a battery pack according to the embodiment of the present invention.

Fig. 6 is a development of an insulating member used for partitioning unit cells in the battery pack from each other.

Fig. 7 is a perspective view of the insulating member.

Fig. 8 is a perspective view of the insulating member folded in a compact shape for making easy the handling in the state before use.

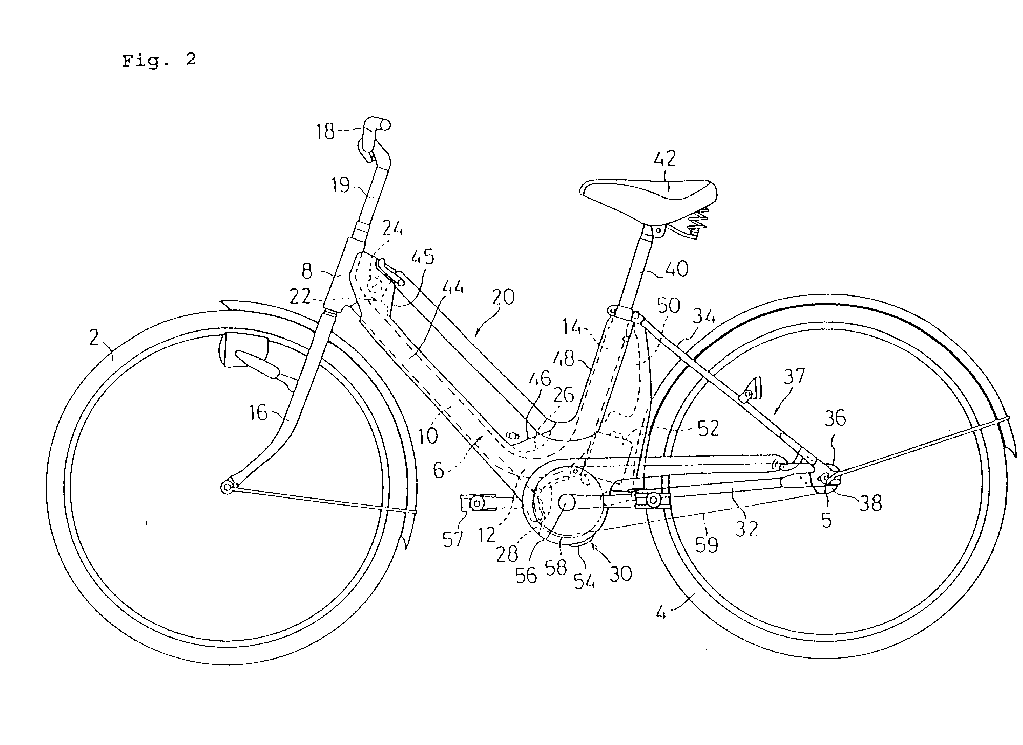

Fig. 2 is a side view of a motor-driven bicycle used in this embodiment. The motor-driven bicycle includes a front frame 6 which is formed in a V-shape as seen from the side and disposed between a front wheel 2 and a rear wheel 4. The front frame 6 has a main frame 10 extending obliquely, downward, and backward from a head pipe 8; an intermediate portion 12 curved downward; and a seat frame 14 extending approximately in the vertical direction.

The head pipe 8 tunably supports a front fork 16 for supporting at its lower end the front wheel 2, and a steering post 19 mounting at the upper end a handle 18. On the main frame 10, a battery case 20 for containing a battery (described later) is removably mounted between a front-side fixing portion 22 and a motor-side connector 26 functioning as a male connector. The battery case 20 has a length being approximately the same as that of the main frame 10. In addition, reference numeral 24 designates a lock device.

The intermediate portion 12 supports an auxiliary motive-power generating device 30 through a hanger plate 28. A rear fork 32, with the front end mounted to the auxiliary motive-power generating device 30, extends approximately in the horizontal direction. The rear end of the rear fork 32 is connected to a bracket 36, together with the rear ends of a pair of right and left rear stays 34 extending obliquely and downward from the upper end of the seat frame 14, to form a rear frame 37. The bracket 36 rotatably supports a rear axle 5 of the rear wheel 4 and a driven sprocket 38.

A saddle seat 42 is supported on the upper end portion of the seat frame 14 through a seat post 40. The surroundings of the front frame 6 and the auxiliary motive-power generating device 30 are covered with a body cover 44. The body cover 44 is divided into right and left parts. The front end portion of the body cover 44 covers the front-side fixing portion 22, and is continuous to an inclined wall 45.

An inclined wall 46 is formed, on the front end portion of the body cover 44 which covers the lock device, in such a manner as to be inclined obliquely, backward, and upward. A front portion of the seat frame 14 has an opening portion which is blocked by a front panel 48.

The auxiliary motive-power generating device 30 includes a control unit 50, a motor 52 and a transmission 54. A crank shaft 56, an output shaft of the transmission 54 is rotated integrally with a drive sprocket 58 for rotating the driven sprocket 38 of the rear wheel 4 through a chain 59.

Pedals 57 are mounted on the crank shaft 56, which are stepped on to be manually driven. At this time, the motor 52 is rotated by an electric-power supplied from a battery in the battery case 20, to generate an auxiliary motive-power. The control unit 50 controls rotation of the motor 52 on the basis of a torque transmitted from the pedals 57 and the rotational frequency of the drive sprocket 58.

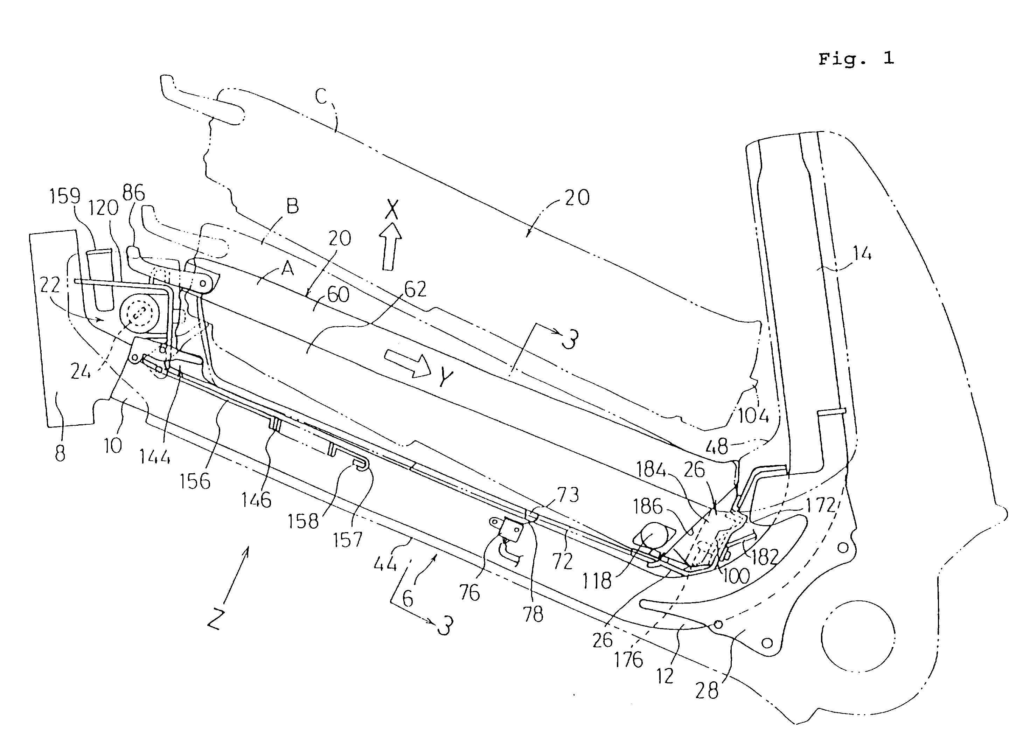

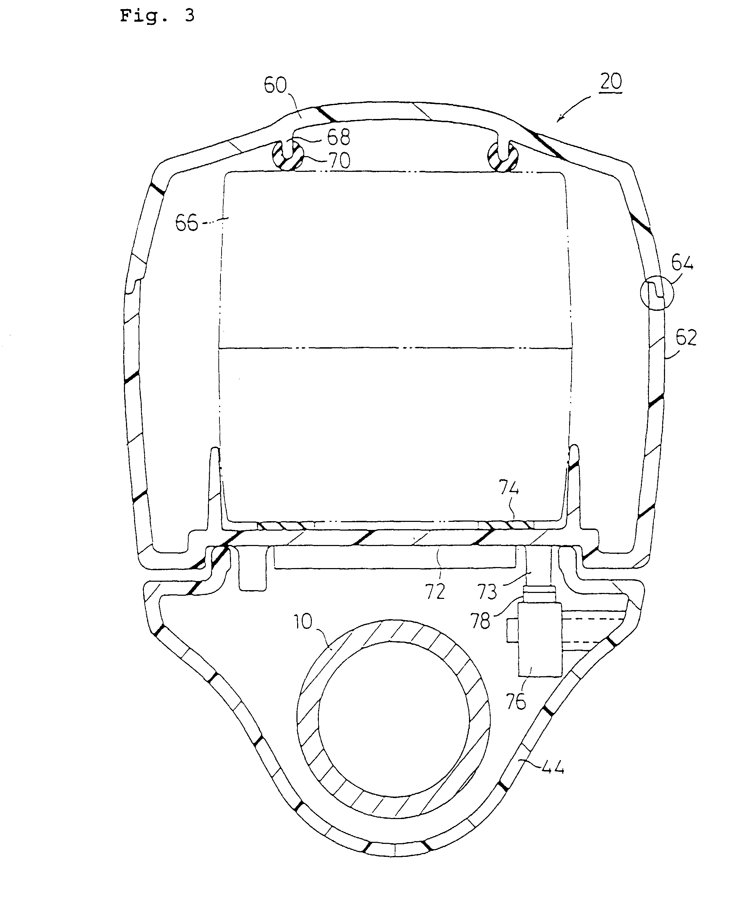

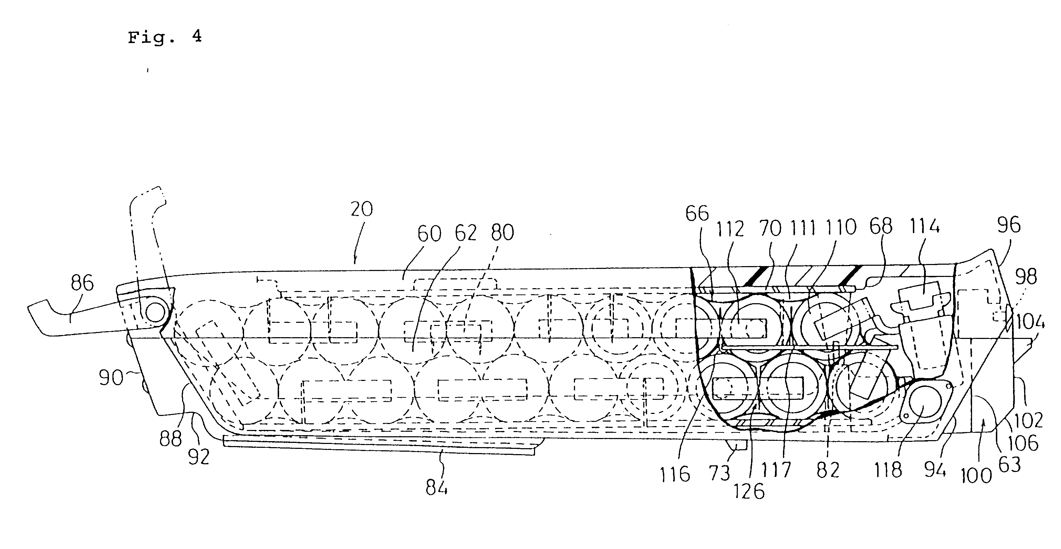

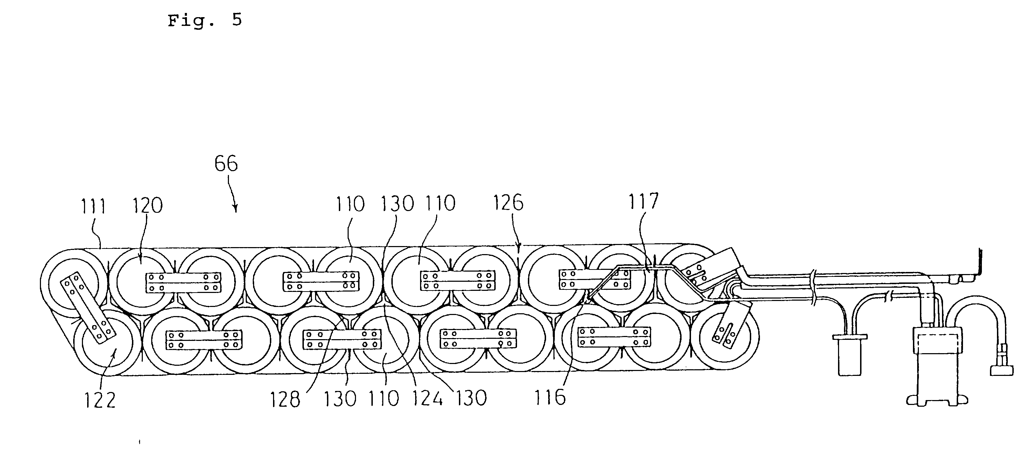

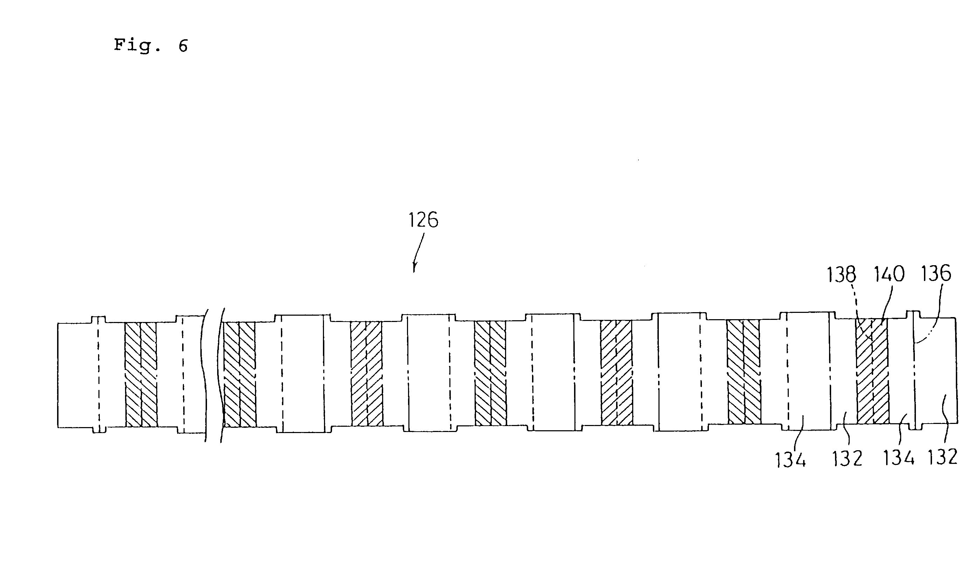

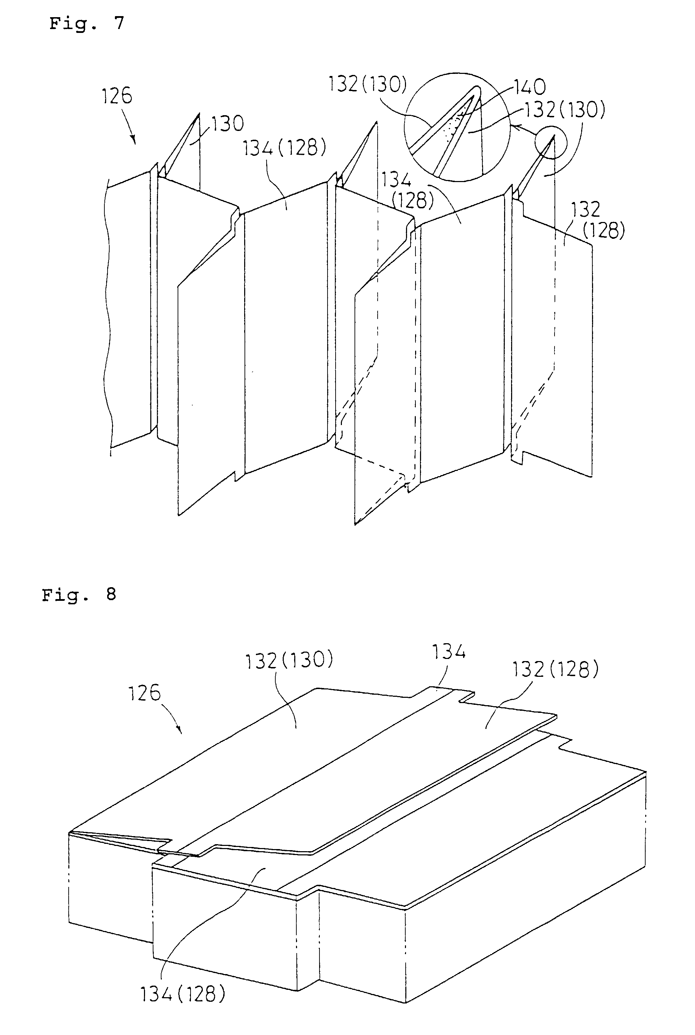

Fig. 1 is a side view of the front frame 6 portion in the state that the body cover 44 is removed; Fig. 3 is a sectional view taken along the line 3-3 of Fig. 1; Fig. 4 is a side view of the battery case 20, with parts partially cut-away; Fig. 5 is a view showing a battery pack according to the embodiment; Fig. 6 is a development of an insulating member; Fig. 7 is a perspective view of the insulating member; and Fig. 8 is a perspective view of the insulating member assembled during storage before use.

As shown in Fig. 1, the front-side fixing portion 22 is provided on the front end portion of the main frame 10, and the motor-side connector 26 is provided in the vicinity of the intermediate portion 12. The battery case 20 can be shifted between a mounting position shown by the solid line A, and a pop-up position shown by the virtual line B. At the mounting position, the front end portion of the battery case 20 is locked by the lock device 24 in the state that the rear end portion thereof is fitted to the motor-side connector 26. On the other hand, at the pop-up position, the front end portion of the battery case 20 is lifted after being released in locking.

At a position shown by the virtual line C, the battery case 20 is removed in the direction approximately perpendicular to the longitudinal direction of the main frame 10 (in the direction shown by the arrow X). The position shown by the virtual line C also shows the state before the battery case 20 is mounted. In addition, when being shifted between the mounting position A and the pop-up position B, the battery case 20 can be slid approximately along the longitudinal direction of the main frame 10 (in the direction shown by the arrow Y).

As shown in Fig. 3, the battery case 20 is a plastic member vertically divided into an upper case 60 and a lower case 62. Mating faces 64, 64 of both the cases 60 and 62 are each stepped, and are overlapped at the stepped portions, to form a labyrinth structure for preventing permeation of water.

A battery pack 66 as a combined battery is contained in the battery case 20. The upper portion of the battery pack 66 abuts rubber made grooved members 70 mounted on ribs 68 projecting downward from the inner surface of the upper case 60. On the other hand, the lower portion of the battery pack 66 abuts rubber made flat cushions 74 interposed between the bottom of the battery pack 66 and the bottom 72 of the lower case 62. The battery pack 66 is thus supported in the battery case 20 in such a manner as to be isolated from vibration.

In Fig. 3, reference numeral 76 designates a limit switch which is mounted on the inner surface of the body cover 44. When the battery case 20 is mounted on the body cover 44, a projection 73 projecting downward from the bottom 72 of the lower case 62 pushes down a downward extending plate spring 78. At this time, by the lowering of the plate spring 78, the limit switch 76 is turned on. On the other hand, the limit switch 76 is turned off when the battery case 20 is located at the pop-up position (described later).

As shown in Fig. 4, the upper and lower cases 60, 62 of the battery case 20 are engaged with each other by means of an engagement claw 80 projecting upward from the lower case 62 on the first half of the side surface of the battery case 20, and are fastened to each other by a tapping screw 82 on the second half of the side surface of the battery case 20. In this way, the upper and lower cases 60, 62 are separably integrated with each other. A rubber cushion member 84 is interposed between the first half of the bottom of the lower case 62 and the main frame 10 side.

A handle 86 is turnably mounted on the front end portion of the battery case 20. An inclined stepped portion 88 is stepped from a front surface 90 of the battery case 20 into a shape corresponding to that of the inclined wall 45 provided at the front end portion of the body cover 44 for covering the front side fixing portion 22 (see Fig. 1). A pressing stepped portion 92 is formed in the lower portion of the front surface 90 in such a manner as to cut into the front surface 90.

A rear inclined surface 94 is formed on the rear end portion of the battery case 20 in such a manner as to be inclined obliquely, backward, and upward. The rear inclined surface 94 has a shape corresponding to that of the inclined wall 46 provided on the front end portion of the body cover 44 (see Fig. 2). A rear surface 96 of the upper case 60 is inclined in a shape having an inverse slope to that of the rear inclined surface 94.

A battery-side connector 100 functioning as a female connector is mounted on the rear end portion of the battery case 20 by means of a vis 98 or the like. A rear surface 102 of the battery-side connector 100 forms a butt surface against the motor-side connector (described later). A positioning engagement projection 104, which is formed approximately into a triangular shape as seen from the side, projects from the center of the butt surface of the battery-side connector 100. The rear end of the bottom of the battery-side connector 100 forms a guide surface 106 inclined backward and upward.

The battery pack 66 is composed of a combined battery which packs the surroundings of a plurality of unit cells 110 with a heat-contractive tube 111. In addition, the unit cells 110 are arranged in such a manner that two sets of unit cells each connected in series are stacked in the vertical direction. The unit cell 110 is of a charging type, for example, a Ni-Cd type.

The adjacent unit cells 110 are connected in series through each conducting plate 112, and are connected to a discharge terminal (described later) of the battery-side connector 100 through a fuse 114. In Fig. 4, reference numeral 116 designates a temperature detecting thermistor; 117 is a lead wire of the thermistor; and 118 is a charge terminal.

The charge terminal 118 contains a reverse-current preventing diode, and is mounted on the rear surface of the lower case 62. Since being provided separately from the discharge terminal, the charge terminal 118 enables the battery to be charged even when the battery case 20 is mounted or when it is removed.

As shown in Fig. 5, the battery pack 66 in this embodiment includes a stack of unit cells 110 arranged in one row and two columns. These unit cells 110 are arranged in a staggered fashion between an upper column 120 and a lower column 122. Specifically, the unit cell 110 are each shifted between the upper and lower columns 120, 122 by a distance equivalent to a radius of the unit cell 110. In other words, the center of each unit cell 110 in one column is positioned over a valley formed between the adjacent unit cells 110 in the other column.

With this arrangement, each gap 124 is formed in an approximately triangular shape by three pieces of the unit cells 110 adjacent to each other between the upper and lower columns 120, 122. The temperature detecting thermistor 116 is inserted in one of the gaps 124.

An insulating member 126 is interposed between the adjacent unit cells 110. The insulating member 126 has between-column unit cell partitioning portions 128 for partitioning the unit cells 110 in the upper and lower columns 120, 122 from each other, and in-row unit cell partitioning portions 130 for partitioning the adjacent unit cells 110 in the row of each column from each other.

The in-row unit cell partitioning portions 130 are branched alternately upward and downward from the between-column unit cell partitioning portions 128 and respectively inserted between the adjacent unit cells 110 in the upper and lower columns 120, 122. The insulating member 126 is formed by folding one sheet many times as shown in the development of Fig. 6.

Specifically, one sheet is partitioned into narrow-width portions 132 and wide-width portions 134 which are alternately arranged. Next, as shown in Fig. 7, the end portion of each wide-width portion 134 and the center of each narrow-width portion 132 are folded in the opposed directions at a folding line 136 and a folding line 138, respectively, to form the three-dimensional insulating member 126.

The narrow-width portion 132 is twice-folded, and the twice-folded portions are bonded to each other by means of an adhesive 140 as needed (see an enlarged view of Fig. 7). The narrow-width portions 132 each form the in-row unit cell partitioning portions 130. In this embodiment, however, the narrow-width portion 132 positioned at each end of the insulating member 126 forms the between-column unit cell partitioning portion 128.

Each slant line portion in Fig. 6 designates a range where the adhesive 140 is applied. On the other hand, the wide-width portions 134 form the between-column unit cell partitioning portions 128.

The insulating member 126 are folded in a compact shape shown in Fig. 7 for making easy the handling in the state before use such as during transfer.

The function of this embodiment will be described below. Referring again to Fig. 5, the unit cells 110 are arranged in a staggered fashion between the upper column 120 and the lower column 122, and thereby each gap 124 is formed in an approximately triangular shape only by three pieces of the adjacent unit cells 110. As a result, the volume of the triangular gap is significantly reduced, as compared with the conventional gap formed in an approximately crossing shape.

Since the volume of the total gaps in the battery pack 66 are thus reduced, the temperature distribution in the battery pack 66 can be equalized. Consequently, the electrochemical reaction in each unit cell 110 is made homogeneous. This is effective to equalize the battery performance and to prolong the service life of the battery.

Since the temperature in the battery pack 66 is measured using the temperature detecting thermistor 116 inserted in the small gap 124, the measurement result is close to the average temperature of three pieces of the adjacent unit cells 110. This enables the accurate temperature measurement.

Since the insulating member 126 has between-column unit cell partitioning portions 128 and in-row unit cell partitioning portions 130, each partitioned space for containing one unit cell 110 can be automatically formed by one between-column unit cell partitioning portion 128 and a pair of the adjacent in-row unit cell partitioning portions 130 in each column.

Accordingly, the battery pack 66 is assembled only by sequentially inserting unit cells 110 in these partitioned spaces one by one, to thereby significantly improve workability in the assembling process.

In this embodiment, since the insulating member 126 can be formed by folding one sheet many times, the number of parts can be reduced and the efficiency in mass-production can be improved. In addition, the insulating member 126 can be folded in a compact shape for making easy the handling in the state before use such as during transfer.

Summerized, the present invention seeks to provide a combined battery capable of stabilizing the battery performance, prolonging the service life of the battery and making easy the manufacture thereof.

A battery pack 66 includes a stack of unit cells 110 arranged in one row and two columns. These unit cells are arranged in a staggered fashion between an upper column 120 and a lower column 122. An insulating member 126 has between-column unit cell partitioning portions 128 for partitioning the unit cells in the upper and lower columns 120, 122 from each other, and in-row unit cell partitioning portions 130 branched alternately upward and downward from the between-column unit cell partitioning portions 128 and respectively inserted between the adjacent unit cells in the upper and lower columns 120, 122 for partitioning the adjacent unit cells in the row of each column from each other. With this arrangement, a relatively small gap 124 is formed between three pieces of the adjacent unit cells 110. As a result, the size of the battery pack 66 is reduced and the temperature in the battery pack 66 is equalized. This is effective to stabilize the battery performance and prolong the service life of the battery. The assembly of the battery pack 66 is also made easy, resulting in the improved workability.

## Claims

1. A combined battery comprising a plurality of unit cells (110) integrally packed, said unit cells (110) being arranged in multiple columns extending in one row direction; wherein
said unit cells (110) are arranged in a staggered fashion between said columns adjacent to each other; and
an insulating member (126) provided for partitioning said unit cells (110) from each other comprises between-column unit cell partitioning portions (128) for partitioning said unit cells (110) in said adjacent columns from each other, and in-row unit cell partitioning portions (130) integrally extending from said between-column unit cell partitioning portions (128) for partitioning said unit cells (110) adjacent to each other in the row direction of each column from each other,
**characterized in that**
said insulating member (126) is formed by a longitudinally extending element,
wherein said between-column unit cell partitioning portions (128) are formed of single layer sections of said longitudinally extending element and
wherein said in-row unit cell partitioning portions (130) are formed of double layer sections of said longitudinally extending element, a first layer of the double layer sections extending from one section of said between-column unit cell partitioning portions (128) and a second layer of the double layer sections returning to another section of said between column unit cell partitioning portions (128).

2. A combined battery according to claim 1, wherein a temperature detecting element (116) for detecting the temperature of said battery is inserted in one of gaps (124) each being formed by three pieces of said adjacent unit cells (110).

## Patentansprüche

1. Kombinierte Batterie mit einer Mehrzahl integral gepackter Einheitszellen (110), wobei die Einheitszellen (110) in mehreren Spalten angeordnet sind, die in einer Reihenrichtung verlaufen; wobei
die Einheitszellen (110) zwischen den einander benachbarten Spalten versetzt angeordnet sind, und
wobei ein Isolierelement (126), das zur Trennung der Einheitszellen (110) voneinander vorgesehen ist, zwischen den Einheitszellenspalten liegende Trennteile (128) zum Trennen der Einheitszellen (110) in den benachbarten Spalten voneinander aufweist sowie in den Einheitszellenreihen liegende Trennteile (130), die integral von den zwischen den Einheitszellenspalten liegenden Trennteilen (128) abstehen, um die in der Reihenrichtung jeder Spalte einander benachbarten Einheitszellen (110) voneinander zu trennen,
dadurch gekennzeichnet, daß
das Isolierelement (126) durch ein langgestrecktes Element gebildet ist,
wobei die zwischen den Einheitszellenspalten liegenden Trennteile (128) aus einlagigen Abschnitten des langgestreckten Elements gebildet sind und
wobei die in den Einheitszellenreihen liegenden Trennteile (130) durch zweilagige Abschnitte des langgestreckten Elements gebildet sind, wobei eine erste Schicht der zweilagigen Abschnitte von einem Abschnitt der zwischen den Einheitszellenspalten liegenden Trennteile (128) absteht und eine zweite Schicht der zweilagigen Abschnitte zu einem anderen Abschnitt der zwischen den Einheitszellenspalten liegenden Trennteile (128) zurückkehrt.

2. Kombinierte Batterie nach Anspruch 1, wobei ein Temperaturerfassungselement (116) zum Erfassen der Temperatur der Batterie in eine von Lücken (124) eingesetzt ist, die jeweils durch drei Stücke der benachbarten Einheitszellen (110) gebildet sind.

## Revendications

1. Batterie combinée comprenant une pluralité d'éléments individuels (110) regroupés en un seul bloc, lesdits éléments individuels (110) étant agencés en de multiples colonnes s'étendant dans une unique direction d'alignement ; batterie dans laquelle
lesdits éléments individuels (110) sont agencés de manière échelonnée entre lesdites colonnes mutuellement adjacentes ; et
une partie d'isolation (126), prévue pour séparer lesdits éléments individuels (110) les uns des autres, comprend des zones (128) de séparation des éléments entre les colonnes, pour séparer lesdits éléments individuels (110) les uns des autres dans lesdites colonnes adjacentes, et des zones (130) de séparation des éléments à l'intérieur des rangées, qui s'étendent d'un seul tenant à partir desdites zones (128) de séparation des éléments entre les colonnes afin de séparer, les uns des autres, lesdits éléments individuels (110) mutuellement adjacents dans la direction d'alignement de chaque colonne,
caractérisée par le fait que
ladite partie d'isolation (126) est constituée d'une pièce s'étendant longitudinalement,
dans laquelle lesdites zones (128) de séparation des éléments entre les colonnes sont formées par des segments à couche unique de ladite pièce s'étendant longitudinalement, et
dans laquelle lesdites zones (130) de séparation des éléments à l'intérieur des rangées sont formées par des segments à double couche de ladite pièce s'étendant longitudinalement, une première couche des segments à double couche partant de l'un des segments desdites zones (128) de séparation des éléments entre les colonnes, et une seconde couche des segments à double couche rejoignant un autre segment desdites zones (128) de séparation des éléments entre les colonnes.

2. Batterie combinée selon la revendication 1, dans laquelle un élément (116) détecteur de température, conçu pour détecter la température de ladite batterie, est inséré dans l'un parmi des interstices (124) dont chacun est formé par trois pièces desdits éléments individuels adjacents (110).
